# EUROPEAN PATENT SPECIFICATION

(11) **EP 4 516 449 B1**
(45) Date of publication and mention of the grant of the patent: **29.10.2025**
(21) Application number: 23194357.2
(22) Date of filing: 30.08.2023
(51) Int. Cl.: B23Q 5/04

(54) **CROSS DRILLING-MILLING UNIT FOR SUB SPINDLE**
QUERBOHR-FRÄSEINHEIT FÜR UNTERSPINDEL
UNITÉ DE PERÇAGE-FRAISAGE TRANSVERSAL POUR BROCHE SECONDAIRE

(43) Date of publication of application: 05.03.2025
(73) Proprietor: Vernal Manufacturing & Engineering Co., Ltd., Taichung City (TW)
(72) Inventor: Kuo, Tien-Kun, Taichung City (TW)
(74) Representative: Petraz, Gilberto Luigi

(56) References cited:
- DE-T5- 112013 001 652
- US-A1- 2002 185 289
- US-B1- 6 183 172

## Description

### 1. Field of the Invention

The present invention relates to a cross drilling-milling unit for a sub spindle, and more particularly to a cross drilling-milling unit which can prevent a mandrel from tilting when adjusting the mandrel.

### 2. Description of Related Art

A conventional cross drilling-milling unit for a sub spindle, also known as a side milling holder for back processing, is mounted to a machine tool for side milling a workpiece, and comprises a body, a transmitting assembly, and a mandrel assembly. The body includes a mounting portion for the mandrel assembly to be disposed therethrough. The mounting portion has a slit which separates the mounting portion into two bulks. The two bulks are configured to clamp the mandrel assembly when an adjusting screw forces the two bulks to approach each other. The transmitting assembly is mounted inside the body, and is configured to be driven by a spindle of the machine tool and rotate the mandrel assembly. A cross drilling-milling unit on which the preamble of appended claim 1 is based is known from Patent Document US 2002/185289 A1.

When a user intends to adjust an axial position of the mandrel assembly, he/she may loosen the adjusting screw, then the two bulks may separate from each other, so the user can move the mandrel assembly to an appropriate position and fasten the adjusting screw to fix the mandrel assembly again.

However, when the two bulks are loosened, the mandrel assembly loses support or limitation in a sudden, so the mandrel assembly tends to tilt. When the two bulks once again clamp and hold the mandrel assembly, the mandrel assembly may be held in the tilted manner relative to an original axis. As a result, the following processing will be done inaccurately beyond tolerance, and an adverse effect may happen to transmission between the transmitting assembly and the mandrel assembly.

The main objective of the present invention is to provide an improved structure of a cross drilling-milling unit for a sub spindle to solve the above-mentioned problems.

The present invention provides a cross drilling-milling unit for a sub spindle having a body and a mandrel assembly. The body has a first direction, a second direction being perpendicular to the first direction, and a mounting portion having a first deck, a second deck, and a third deck arranged along the first direction in order and spaced apart from one another. The mandrel assembly is disposed through the first deck, the second deck, and the third deck along the first direction and is mounted on the mounting portion. The second deck has a slit disposed along the second direction and separating the second deck into two bulks, and the two bulks are configured to clamp the mandrel assembly when forced to move toward each other.

Other objectives, advantages and novel features of the invention will become more apparent from the following detailed description when taken in conjunction with the accompanying drawings.

In the drawings:
Fig. 1 is a perspective view of a preferred embodiment of a cross drilling-milling unit for a sub spindle in accordance with the present invention;
Fig. 2 is an exploded view of the cross drilling-milling unit in Fig. 1;
Fig. 3 is a front view in partial section of the cross drilling-milling unit in Fig. 1;
Fig. 4 is a side view in partial section of the cross drilling-milling unit in Fig. 1; and
Fig. 5 is an enlarged top view in partial section of the cross drilling-milling unit in Fig. 1.

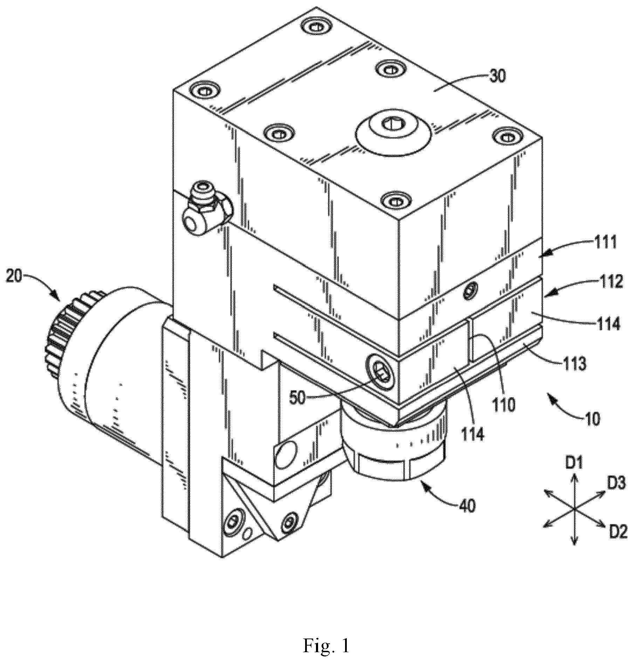

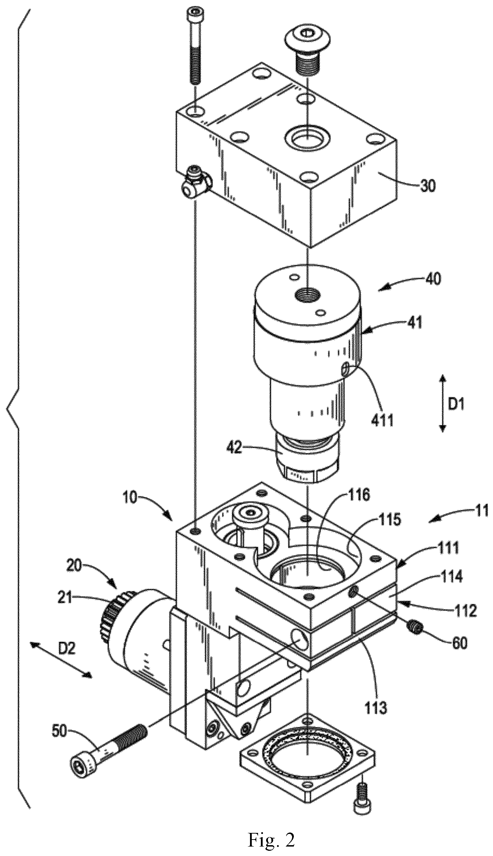

With reference to Figs. 1 and 2, a preferred embodiment of a cross drilling-milling unit for a sub spindle in accordance with the present invention comprises a body 10, a driving assembly 20, a gear box 30, a mandrel assembly 40, an adjusting assembly 50, and a set screw 60.

With reference to Fig. 1, a body 10 defines a first direction D1, a second direction D2, and a third direction D3, all of which are mutually perpendicular. The body 10 has a substantially inverted L-shaped configuration. Furthermore, the body 10 comprises a mounting portion 11 having a first deck 111, a second deck 112, and a third deck 113 that are formed along the first direction D1 in order and spaced apart from one another.

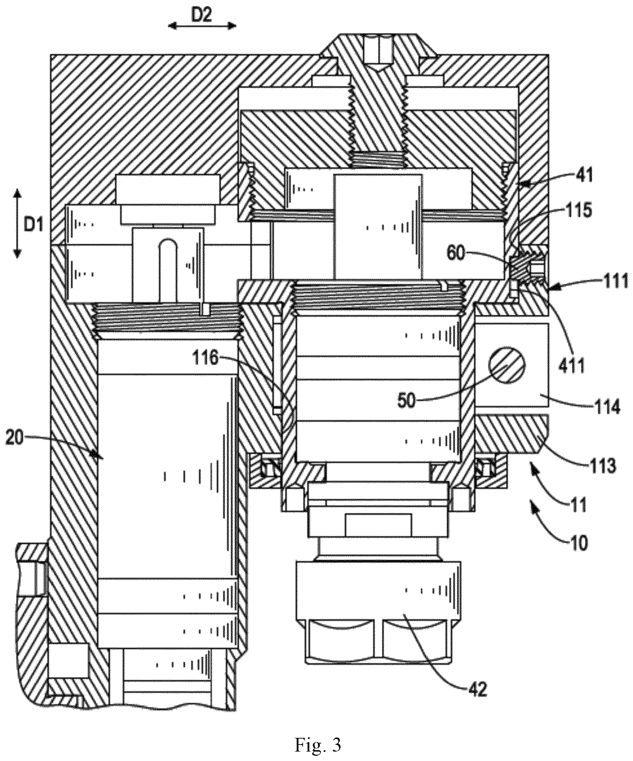

With reference to Figs. 2 and 3, the driving assembly 20 is mounted inside the body 10, extends along the first direction D1, and comprises a shaft 21 protruding from the body 10 along the second direction D2. The driving assembly 20 is rotatable via a gear module.

With reference to Figs. 2 and 3, the mandrel assembly 40 is mounted on the mounting portion 11 of the body 10 through the first deck 111, the second deck 112, and the third deck 113 along the first direction D1. With reference to Figs. 2 and 3, the gear box 30 is mounted on a side of the body 10 along the first direction D1, and covers the driving assembly 20 and the mandrel assembly 40. The gear box 30 has a transmitting gear module inside for torque transmission. The driving assembly 20 is capable of rotating the transmitting gear module inside the gear box 30, and further rotating the mandrel assembly 40. Since specific structures and principles of transmission of the driving assembly 20 and the gear box 30 are prior arts, detailed descriptions are omitted.

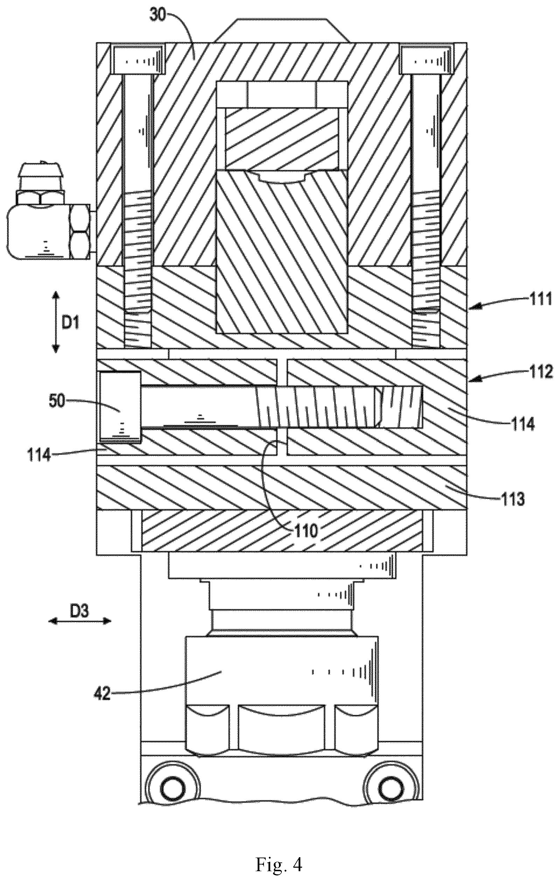

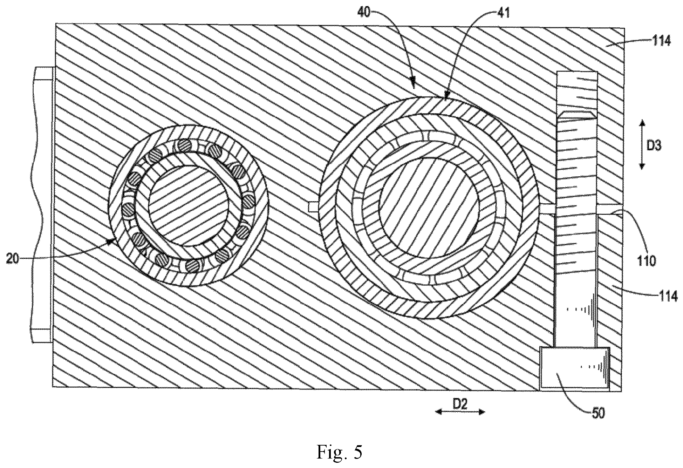

With reference to Figs. 1, 4, and 5, the second deck 112 has a slit extending along the second direction D2 and separating the second deck 112 into two bulks 114. When the two bulks 114 are forced to approach each other, the two bulks 114 clamp the mandrel assembly 40. Specifically, in the preferred embodiment of the present invention, with reference to Figs. 4 and 5, the adjusting screw 50 penetrates one of the two bulks 114 of the second deck 112 along the second direction D2, a head of the adjusting screw 50 is engaged in the bulk 114, and the adjusting screw 50 is mounted with the other one of the two bulks 114 by threads. In this way, when the adjusting screw 50 is tightened up, the two bulks 114 are thereby forced to approach each other, so as to provide an attracting force for the two bulks 114.

With the aforementioned technical features, when a user intends to reset the mandrel assembly 40, he/she may loosen the adjusting screw 50, the two bulks 114 of the second deck 112 thereby release the mandrel assembly 40, and the user may change a position of the mandrel assembly 40 relative to the mounting portion 11 along the first direction D1. During this process, the first deck 111 and the third deck 113 still provide necessary constraints to two ends of the mandrel assembly 40 on two sides of the second deck 112 to prevent tilt and swing of the mandrel assembly 40 and keep the mandrel assembly 40 extending along the first direction D1 to overcome the problems of the conventional cross drilling-milling unit for a sub spindle.

Moreover, with reference to Figs. 2 and 3, the mandrel assembly 40 comprises a sleeve 41 and an output shaft 42 rotatably disposed in the sleeve 41. The first deck 111 has a cavity 115 and a through hole 116 disposed on a side of the first deck 111 facing the gear box 30. The cavity 115 and the through hole 116 jointly form a stepped edge, facilitating the sleeve 41 of the mandrel assembly 40 to be supported by the cavity 115 and further to extend through the second deck 112 and the third deck 113 via the through hole 116.

In the preferred embodiment of the present invention, the first deck 111 is a single-block structure, not being divided by any slit such that the through hole 116 has a closed periphery. Therefore, when the adjusting screw 50 is loosened, constraining capability of the first deck 111 for the sleeve 41 is improved. The third deck 113 may have a similar configuration as well. In another embodiment, the configurations of the first deck 111 and the third deck 113 may be similar to that of the second deck 112, i.e. two-bulk structures that may be adjusted by adjusting screws. As long as the mandrel assembly 40 is not fixed by any one of the first deck 111 and the third deck 113 to an extent that its position cannot be adjusted, the user may only operate the adjusting screw 50 on the second deck 112 to adjust the mandrel assembly 40, and this embodiment also satisfies the purpose of the present invention, namely the effect of constraining the two ends of the mandrel assembly 40 to prevent tilt.

Preferably, with reference to Figs. 2 and 3, the sleeve 41 has an elongated groove 411 disposed radially on an outer surface of the sleeve 41 and extending along the first direction D1. The set screw 60 is mounted through the first deck 111 of the body 10 along the second direction D2 and extends into the elongated groove 411. In this way, the set screw 60 is capable of preventing the sleeve 41 from rotating relative to the mounting portion 11 of the body 10, thereby further constraining the sleeve 41 to solely move along the first direction D1 relative to the mounting portion 11, so avoidable processing error when the mandrel assembly 40 is clamped may be prevented.

With the aforementioned technical features, the present invention provides the user with the effect to prevent the mandrel assembly 40 from tilting and swinging when the user adjusts the position of the mandrel assembly 40 by providing two-position constraints with the first deck 111 and the third deck 113. The problems of the conventional cross drilling-milling unit for a sub spindle is therefore effectively solved, processing precision is improved, and transmitting effect is kept in a good manner.

## Claims

1. A cross drilling-milling unit for a sub spindle, **characterized in that** the cross drilling-milling unit comprises:
a body (10) having a first direction (D1) and a second direction (D2) being perpendicular to the first direction (D1), and comprising a mounting portion (11);
**characterised in that** the mounting portion (11) has a first deck (111), a second deck (112), and a third deck (113) arranged along the first direction (D1) in order and spaced apart from one another; and
a mandrel assembly (40) is disposed through the first deck (111), the second deck (112), and the third deck (113) along the first direction (D1), and is mounted on the mounting portion (11);
wherein the second deck (112) has a slit (110) disposed along the second direction (D2) and separating the second deck (112) into two bulks (114), and the two bulks (114) are configured to clamp the mandrel assembly (40) when forced to move toward each other.

2. The cross drilling-milling unit as claimed in claim 1, wherein the first deck (111) has a through hole (116) disposed therethrough along the first direction (D1), having a closed periphery, and configured for the mandrel assembly (40) to be disposed through.

3. The cross drilling-milling unit as claimed in claim 1, wherein
the mandrel assembly (40) comprises
a sleeve (41) having an elongated groove (411) disposed radially on an outer surface of the sleeve (41) and extending along the first direction (D1); and
the body (10) comprises a set screw (60) mounted through the first deck (111) of the body (10) along the second direction (D2) and extending into the elongated groove (411).

4. The cross drilling-milling unit as claimed in claim 2, wherein
the mandrel assembly (40) comprises
a sleeve (41) having an elongated groove (411) disposed radially on an outer surface of the sleeve (41) and extending along the first direction (D1); and
the body (10) comprises a set screw (60) mounted through the first deck (111) of the body (10) along the second direction (D2) and extending into the elongated groove (411).

5. The cross drilling-milling unit as claimed in any one of claims 1 to 4, wherein the body (10) comprises an adjusting screw (50) passing through one of the two bulks (114) and connected with the other one of the two bulks (114) so as to force the two bulks (114) to approach one another.

6. The cross drilling-milling unit as claimed in claim 5, wherein the body (10) has a third direction (D3) which is perpendicular to the first direction (D1) and the second direction (D2), and the adjusting screw (50) is configured to force the two bulks (114) to approach one another along the third direction (D3).

## Patentansprüche

1. Querbohr-Fräseinheit für eine Unterspindel, **dadurch gekennzeichnet, dass** die Querbohr-Fräseinheit umfasst:
einen Körper (10), der eine erste Richtung (D1) und eine zweite Richtung (D2) hat, die zur ersten Richtung (D1) senkrecht ist, und umfassend einen Montageabschnitt (11);
**dadurch gekennzeichnet, dass** der Montageabschnitt (11) ein erstes Deck (111), ein zweites Deck (112) und ein drittes Deck (113) hat, die entlang der ersten Richtung (D1) in Reihenfolge angeordnet sind und voneinander beabstandet sind; und
eine Dornanordnung (40) durch das erste Deck (111), das zweite Deck (112) und das dritte Deck (113) entlang der ersten Richtung (D1) angeordnet ist, und am Montageabschnitt (11) montiert ist;
worin das zweite Deck (112) einen Schlitz (110) hat, der entlang der zweiten Richtung (D2) angeordnet ist und das zweite Deck (112) in zwei Blöcke (114) trennt, und die zwei Blöcke (114) dazu eingerichtet sind, die Dornanordnung (40) zu klemmen, wenn sie dazu gezwungen werden, sich zueinander zu bewegen.

2. Querbohr-Fräseinheit nach Anspruch 1, worin das erste Deck (111) ein Durchgangsloch (116) hat, das dadurch entlang der ersten Richtung (D1) angeordnet ist, das einen geschlossenen Umfang hat, und dazu eingerichtet ist, damit die Dornanordnung (40) dadurch angeordnet wird.

3. Querbohr-Fräseinheit nach Anspruch 1, worin die Dornanordnung (40) eine Hülse (41) umfasst, die eine längliche Nut (411) aufweist, die an einer äußeren Fläche der Hülse (41) radial angeordnet ist und sich entlang der ersten Richtung (D1) erstreckt; und
der Körper (10) eine Feststellschraube (60) umfasst, die durch das erste Deck (111) des Körpers (10) entlang der zweiten Richtung (D2) montiert ist und sich in die längliche Nut (411) hinein erstreckt.

4. Querbohr-Fräseinheit nach Anspruch 2, worin die Dornanordnung (40) eine Hülse (41) umfasst, die eine längliche Nut (411) aufweist, die an einer äußeren Fläche der Hülse (41) radial angeordnet ist und sich entlang der ersten Richtung (D1) erstreckt; und
der Körper (10) eine Feststellschraube (60) umfasst, die durch das erste Deck (111) des Körpers (10) entlang der zweiten Richtung (D2) montiert ist und sich in die längliche Nut (411) hinein erstreckt.

5. Querbohr-Fräseinheit nach einem der Ansprüche 1 bis 4, worin der Körper (10) eine Einstellschraube (50) umfasst, die durch einen der zwei Blöcke (114) läuft und mit dem anderen der zwei Blöcke (114) verbunden ist, so dass die zwei Blöcke (114) gezwungen werden, sich einander zu nähern.

6. Querbohr-Fräseinheit nach Anspruch 5, worin der Körper (10) eine dritte Richtung (D3) hat, die zur ersten Richtung (D1) und zur zweiten Richtung (D2) senkrecht ist, und die Einstellschraube (50) dazu eingerichtet ist, die zwei Blöcke (114) dazu zu zwingen, sich entlang der dritten Richtung (D3) einander zu nähern.

## Revendications

1. Unité de perçage-fraisage transversal pour une broche secondaire, **caractérisée en ce que** l'unité de perçage-fraisage transversal comprend :
un corps (10) ayant une première direction (D1) et une deuxième direction (D2) étant perpendiculaire à la première direction (D1), et comprenant une partie de montage (11) ;
**caractérisé en ce que** la partie de montage (11) a un premier pont (111), un deuxième pont (112) et un troisième pont (113) disposés le long de la première direction (D1) dans l'ordre et espacés les uns des autres ; et
un ensemble mandrin (40) est disposé à travers le premier pont (111), le deuxième pont (112) et le troisième pont (113) le long de la première direction (D1), et est monté sur la partie de montage (11) ;
dans lequel le deuxième pont (112) a une fente (110) disposée le long de la deuxième direction (D2) et séparant le deuxième pont (112) en deux masses (114), et les deux masses (114) sont configurées pour serrer l'ensemble mandrin (40) lorsqu'elles sont forcées de se rapprocher l'une de l'autre.

2. Unité de perçage-fraisage transversal selon la revendication 1, dans laquelle le premier pont (111) a un trou traversant (116) disposé à travers celui-ci le long de la première direction (D1), ayant une périphérie fermée, et configuré pour que l'ensemble mandrin (40) soit disposé à travers.

3. Unité de perçage-fraisage transversal selon la revendication 1, dans laquelle
l'ensemble mandrin (40) comprend
un manchon (41) ayant une rainure allongée (411) disposée radialement sur une surface extérieure du manchon (41) et s'étendant le long de la première direction (D1) ; et
le corps (10) comprend une vis de réglage (60) montée à travers le premier pont (111) du corps (10) le long de la deuxième direction (D2) et s'étendant dans la rainure allongée (411).

4. Unité de perçage-fraisage transversal selon la revendication 2, dans laquelle
l'ensemble mandrin (40) comprend
un manchon (41) ayant une rainure allongée (411) disposée radialement sur une surface extérieure du manchon (41) et s'étendant le long de la première direction (D1) ; et
le corps (10) comprend une vis de réglage (60) montée à travers le premier pont (111) du corps (10) le long de la deuxième direction (D2) et s'étendant dans la rainure allongée (411).

5. Unité de perçage-fraisage transversal selon l'une quelconque des revendications 1 à 4, dans laquelle le corps (10) comprend une vis de réglage (50) traversant l'une des deux masses (114) et reliée à l'autre des deux masses (114) de manière à forcer les deux masses (114) à se rapprocher l'une de l'autre.

6. Unité de perçage-fraisage transversal selon la revendication 5, dans laquelle le corps (10) a une troisième direction (D3) qui est perpendiculaire à la première direction (D1) et à la deuxième direction (D2), et la vis de réglage (50) est configurée pour forcer les deux masses (114) à se rapprocher l'une de l'autre le long de la troisième direction (D3).
